(19) Europäisches Patentamt
European Patent Office
Office européen des brevets

(11) **EP 1 866 554 B1**

(12) **FASCICULE DE BREVET EUROPEEN**

(45) Date de publication et mention
de la délivrance du brevet:
**17.09.2008 Bulletin 2008/38**

(21) Numéro de dépôt: **06726200.6**

(22) Date de dépôt: **28.02.2006**

(51) Int Cl.:
**F16D 48/06** (2006.01)

(86) Numéro de dépôt international:
**PCT/FR2006/050176**

(87) Numéro de publication internationale:
**WO 2006/100399 (28.09.2006 Gazette 2006/39)**

(54) **PROCEDE DE COMMANDE DU GLISSEMENT D'UN SYSTEME D'EMBRAYAGE HUMIDE**

**SCHLUPFREGELVERFAHREN FÜR EIN NASSKUPPLUNGSSYSTEM**

**SLIP CONTROL METHOD FOR A WET CLUTCH SYSTEM**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **25.03.2005 FR 0502976**

(43) Date de publication de la demande:
**19.12.2007 Bulletin 2007/51**

(73) Titulaire: **Renault SAS**
**92100 Boulogne Billancourt (FR)**

(72) Inventeur: **DEVAUD, Emmanuel**
**F-92140 Clamart (FR)**

(74) Mandataire: **Rougemont, Bernard**
**Renault Technocentre**
**Département Propriété Intellectuelle**
**Sce 00267 TCR GRA 2 36**
**1 Avenue du Golf**
**78288 Guyancourt Cedex (FR)**

(56) Documents cités:
**DE-A1- 3 540 719          DE-A1- 4 124 722**
**DE-A1- 10 316 459          US-A1- 2003 134 713**

**Description**

La présente invention est relative à un procédé de commande du glissement d'un système d'embrayage humide muni d'un circuit de refroidissement et formant partie d'une transmission d'un véhicule automobile propulsé par un moteur à combustion interne, par asservissement dudit glissement à une valeur de consigne.

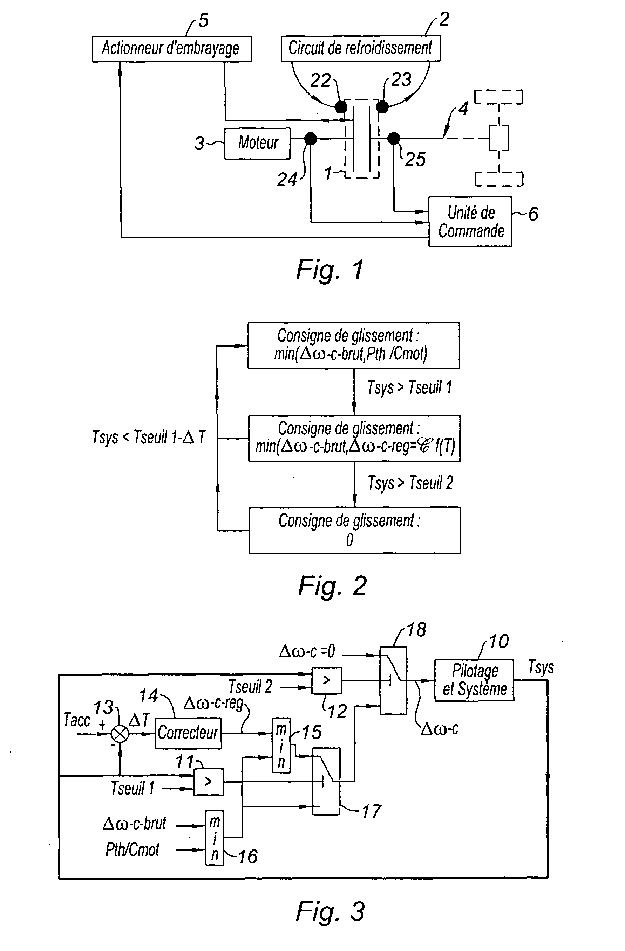

On a représenté schématiquement à la figure 1 du dessin annexé un système d'embrayage humide d'un type connu composé d'un mécanisme d'embrayage classique 1, à disques de friction, et d'un circuit 2 dans lequel circule un fluide, couramment de l'huile, de refroidissement de ce mécanisme et notamment de ses disques.

Un tel système fait couramment partie de la transmission interposée entre un moteur à combustion interne 3 et le reste 4 (schématisé en trait interrompu) d'un véhicule automobile propulsé par ce moteur. Dans le cas d'une transmission automatique, celle-ci comporte alors, par exemple, un convertisseur de couple et une boîte de vitesses non représentés à la figure 1.

Le mécanisme d'embrayage est manoeuvré par un actionneur 5, hydraulique par exemple, lui-même piloté par une unité de commande 6. Dans les phases de patinage de l'embrayage, cette unité de commande pilote le glissement de l'embrayage $\Delta\omega$ = Nmot - Nemb, soit la différence des vitesses angulaires, ou régimes, des arbres de sortie 7 et 8 du moteur et de l'embrayage, respectivement.

On connaît du brevet des Etats-Unis d'Amérique N° 5 283 738 un système d'embrayage du type décrit ci-dessus, dans lequel le glissement de l'embrayage est asservi par l'unité de commande 6 à une valeur de consigne liée au confort de passage d'un rapport de boîte de vitesses à un autre.

On comprend que les commandes en glissement des disques de l'embrayage sollicitent thermiquement ceux-ci. Suivant une solution classique de ce problème, pour éviter qu'un échauffement excessif ne risque de détériorer les disques de manière irréversible, l'unité de commande supprime tout glissement à la détection d'une éventuelle surchauffe de ces disques. C'est là, évidemment, une solution qui nuit à la prestation recherchée.

Une autre solution à laquelle on peut penser consiste à prendre en compte la température des disques, dans une consigne de glissement cartographiée. Cette solution présente l'inconvénient d'accroître l'importance d'une cartographie déjà volumineuse en l'état actuel de la technique, suivant lequel cette cartographie comporte deux entrées. En outre, celle-ci ne prend en compte que des valeurs courantes de ses grandeurs d'entrée et non le sens de l'évolution de ces grandeurs, sauf à accepter les inconvénients d'une cartographie encore plus volumineuse.

Par ailleurs l'absence d'effet mémoire d'une cartographie peut conduire à des instabilités du système. Enfin, si l'on tente de réduire la taille de la cartographie, on s'expose aussi à des risques d'oscillations du système et donc de prestation défectueuse.

Le document DE 4124722 montre un procédé de commande du glissement d'un système d'embrayage suivant le préambule de la revendication 1.

La présente invention a donc pour but de fournir un procédé de commande du glissement d'un système d'embrayage humide qui ne présente pas les inconvénients explicités ci-dessus.

On atteint ce but de l'invention, ainsi que d'autres qui apparaîtront à la lecture de la description qui va suivre, avec un procédé de commande du glissement d'un système d'embrayage humide du type décrit en préambule de la présente description, suivant lequel on asservit le glissement ($\Delta\omega$) à une valeur de consigne ($\Delta\omega$_c), ce procédé étant remarquable en ce qu'on évalue la température (Tsys) du système, on la compare à une température de seuil (Tseuil1) prédéterminée et, lorsque la température (Tsys) du système dépasse la température de seuil (Tseuil1), on élabore une consigne de glissement en régulation thermique ($\Delta\omega$_c_reg) par régulation en boucle fermée de la température (Tsys) du système sur une température (Tacc) inférieure à la température de seuil (Tseuil1) et on choisit pour valeur de consigne ($\Delta\omega$_c) du glissement ($\Delta\omega$_c) = min($\Delta\omega$_c_brut, $\Delta\omega$_c_reg), où ($\Delta\omega$_c_brut) est une consigne de glissement brut, indépendante de la température du système.

Comme on le verra en plus de détails dans la suite, on assure ainsi la sécurité thermique du système tout en préservant le plus possible la prestation "commande du glissement", contrairement à ce que l'on observe dans les procédés de la technique antérieure où la réaction à un échauffement excessif de l'embrayage consiste simplement à supprimer immédiatement tout glissement.

Par ailleurs on remarquera que l'invention fait appel à une procédure d'arbitrage de la consigne de glissement applicable et non à une modification d'une cartographie donnant la consigne de glissement brut, ce qui permet d'éviter les inconvénients, mentionnés plus haut, qui résultent d'une telle modification.

Suivant d'autres caractéristiques, optionnelles, de la présente invention :

- lorsque la température (Tsys) du système est inférieure à la température de seuil (Tseuil1), on choisit pour la valeur de consigne du glissement ($\Delta\omega$_c) = min($\Delta\omega$_c_brut,Pth/Cmot) où Pth est la puissance thermique évacuable par le circuit de refroidissement et (Cmot) le couple délivré par le moteur.
- lorsque la température (Tsys) du système est supérieure à une deuxième température de seuil (Tseuil2) elle-même supérieure à la première température de seuil (Tseuil1), on annule la valeur de la consigne de glissement ($\Delta\omega$_c).

- la consigne de glissement brut ($\Delta\omega\_c\_brut$) est cartographiée.
- les paramètres d'entrée de cette cartographie sont le régime (Nmot) et le couple (Cmot) du moteur.
- on évalue la température (Tsys) du système au moyen d'un estimateur constitué d'un filtre de Kalman.
- les grandeurs d'entrée de ce filtre sont les régimes d'entrée et de sortie du système, les températures d'entrée et de sortie du circuit de refroidissement et le couple transmis par le système.
- la boucle fermée incorpore un correcteur PI.
- les seuils correspondant aux températures de seuil (Tseuil1, Tseuil2) sont affectés d'une hystérésis.

D'autres caractéristiques et avantages de la présente invention apparaîtront à la lecture de la description qui va suivre et à l'examen du dessin annexé dans lequel :

- la figure 1 est une représentation schématique d'un système d'embrayage humide et de son dispositif de commande, décrits en préambule de la présente description, du type auquel s'applique le procédé suivant la présente invention,
- la figure 2 est un diagramme décisionnel d'une procédure d'arbitrage mise en oeuvre par le procédé suivant la présente invention,
- la figure 3 est un diagramme fonctionnel équivalent au diagramme fonctionnel de la figure 2,
- la figure 4 est un diagramme fonctionnel d'une boucle de pilotage de glissement recevant la consigne de glissement déterminée par le procédé suivant l'invention,
- la figure 5 représente schématiquement un estimateur fournissant la température du système d'embrayage utilisée dans la présente invention, et
- les figures 6A et 6B représentent l'évolution temporelle de la température et du glissement de l'embrayage lors d'une séquence de fonctionnement de cet embrayage sous la commande du procédé suivant la présente invention.

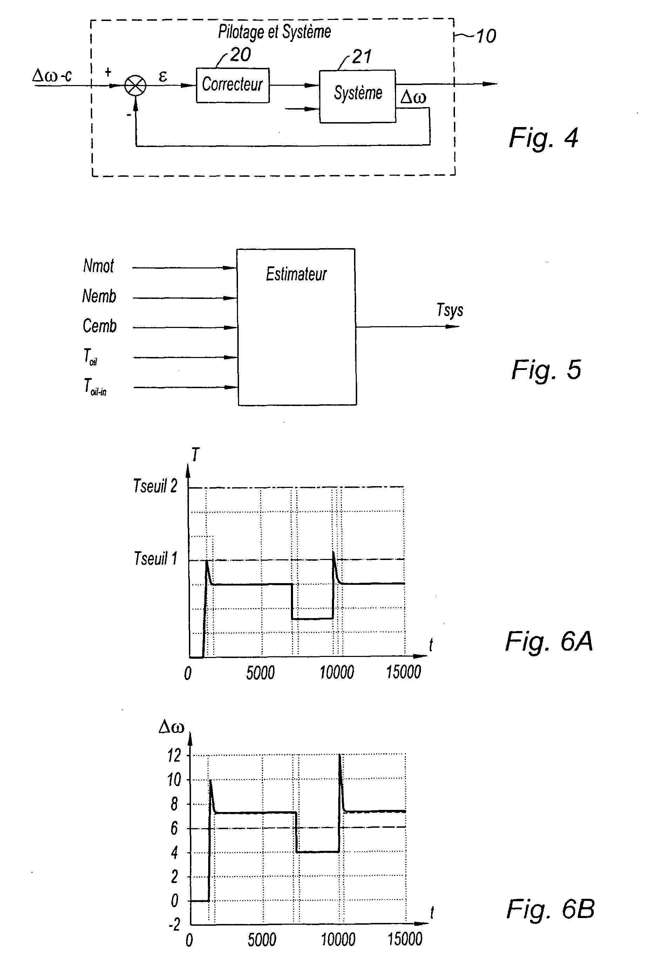

On se réfère au diagramme décisionnel de la figure 2 du dessin annexé pour décrire une séquence d'arbitrage qui est à la base du procédé suivant l'invention. Celle-ci implique la connaissance de la température courante Tsys des disques du mécanisme d'embrayage. Cette température peut être soit mesurée soit évaluée à l'aide d'un estimateur tel que celui représenté à la figure 5, par exemple, que l'on décrira en plus de détail dans la suite de la présente description. La procédure fait intervenir aussi une température de seuil Tseuil1, température maximale conseillée pour les garnitures en fonctionnement normal. Un dépassement de cette température crée un risque de diminution des performances du système d'embrayage, sans qu'une telle diminution soit irréversible. La procédure fait encore intervenir une deuxième température de seuil Tseuil2, qui est la température maximale à ne pas dépasser pour éviter toute dégradation irréversible du système, notamment en ce qui concerne les performances des disques de friction. La procédure fait enfin intervenir une consigne de glissement brut $\Delta\omega\_c\_brut$, optimale en terme d'agrément de conduite, tirée d'une cartographie à deux entrées seulement : le régime Nmot et le couple Cmot du moteur 3, donc peu volumineuse. Dans un véhicule automobile actuel on dispose couramment d'une mesure de ce régime. Des moyens logiciels incorporés aux moyens de calcul également disponibles dans un tel véhicule, permettent d'évaluer le couple moteur.

Comme représenté à la figure 2, quand la température du système Tsys est inférieure à une température Tseuil1 - $\Delta T$, où $\Delta T$ établit une hystérésis sur ce seuil de température pour une raison qui sera explicitée plus loin, on compare la consigne de glissement brut $\Delta\omega\_c\_brut$ tirée de la cartographie au rapport Pth/Cmot et on utilise comme consigne de glissement le terme le plus petit de la comparaison soit min($\Delta\omega\_c\_brut$, Pth/Cmot), Pth étant la puissance thermique évacuable par le circuit de refroidissement 2 et Cmot le couple délivré par le moteur. Ce premier niveau d'arbitrage a ainsi pour but d'empêcher que les capacités de ce circuit ne soient dépassées par une utilisation d'une consigne de glissement d'une valeur trop élevée.

Si les circonstances d'utilisation de l'embrayage font que la température Tsys dépasse le seuil Tseuil1, on calcule une consigne de glissement particulière $\Delta\omega\_c\_reg$, dite "en régulation thermique", et on la choisit comme nouvelle consigne de glissement si sa valeur est plus faible que celle de la consigne brute courante au moment de la comparaison. Dans le cas contraire on choisit la consigne brute courante. La nouvelle consigne de glissement prise en compte est donc min($\Delta\omega\_c\_brut$, $\Delta\omega\_c\_reg$), selon un deuxième niveau d'arbitrage du procédé suivant la présente invention.

Suivant une caractéristique importante de la présente invention, cette consigne de glissement particulière est élaborée à travers une régulation en boucle fermée de la température du système d'embrayage, soit $\Delta\omega\_c\_reg$ = bf(T), sur une température Tacc, inférieure à la température Tseuil1, acceptable et permettant d'assurer une diminution de la température des disques de friction. Cette température Tacc est déterminée à partir d'essais et des préconisations des fabricants des disques.

La température du système peut cependant venir à dépasser le seuil Tseuil2, par exemple si la phase décrite ci-dessus du procédé suivant l'invention ne permet pas de ramener assez rapidement cette température en dessous du seuil Tseuil1, par exemple en raison d'un débit de liquide de refroidissement trop faible. Dans ce cas, la consigne de glissement est ramenée à zéro comme l'indique le diagramme de la figure 2, pour prévenir une dégradation irréversible du système. Comme cette figure l'indique également, on ne sort de l'état où la consigne de glissement est nulle que lorsque la température permet de revenir, éventuellement, sur la consigne de glissement brut.

Il apparaît maintenant que les arbitrages étagés de choix de la consigne de glissement applicable organisés par le procédé suivant la présente invention permettent, conformément aux buts poursuivis par cette invention, de protéger le système d'embrayage de toute dégradation par surchauffe, sans recours immédiat et brutal à une consigne de glissement nulle. L'extraction d'une consigne de glissement convenable, d'un processus de régulation en température, permet d'obtenir une telle consigne sensible à cette température sans accroître, avantageusement comme on l'a vu en préambule de la présente description, le nombre des paramètres d'entrée de la cartographie utilisée.

On se réfère maintenant à la figure 3 du dessin annexé où l'on a représenté un diagramme fonctionnel d'un dispositif, logiciel ou matériel, propre à mettre en oeuvre le diagramme décisionnel de la figure 2.

Le bloc 10 représente le système d'embrayage et les moyens de pilotage du glissement de ce système suivant une consigne $\Delta\omega\_c$, le système réagissant à cette consigne en montant à la température Tsys surveillée et corrigée par le procédé suivant l'invention. Pour ce faire cette température est délivrée à des premier et deuxième comparateurs 11 et 12, pour y être comparée aux températures de seuil Tseuil1 et Tseuil2, respectivement.

La température Tsys est aussi délivrée, suivant l'invention, à une entrée 13 d'une boucle fermée de régulation en température, où se forme un signal d'erreur en température $\Delta T$, par soustraction de Tsys d'une température Tacc définie comme indiqué ci-dessus. La boucle est classiquement équipée d'un correcteur 14 qui délivre la consigne $\Delta\omega\_c\_reg$ définie ci-dessus à une entrée d'un bloc "min" 15. Ce correcteur sera décrit en plus de détail dans la suite de la présente description.

Une deuxième entrée de celui-ci est alimentée par la sortie d'un deuxième bloc "min" 16 alimenté par la consigne brute $\Delta\omega\_c\_brut$ et le rapport Pth/Cmot également définis ci-dessus. La sortie du bloc 16 alimente aussi une deuxième entrée du bloc 15, pour y être comparée à la consigne $\Delta\omega\_c\_reg$.

Un premier bloc d'arbitrage 17, ou "switch", recoit en entrées la sortie du comparateur 11 et les sorties des blocs "min" 15 et 16. Quand la sortie du comparateur 15 est haute (Tsys ≥ Tseuil1), la sortie du bloc 17 transmet la sortie du bloc 15 à une entrée d'un deuxième bloc d'arbitrage 18 également alimenté par la sortie du comparateur 12 et par une valeur nulle pour la consigne de glissement $\Delta\omega\_c$ à délivrer au bloc 10.

La sortie du bloc 18 délivre la consigne de glissement qui doit être prise en compte par les moyens de pilotage incorporés au bloc 10. C'est ainsi que, si Tsys ≥ Tseuil2, la consigne délivrée est $\Delta\omega\_c = 0$ alors que, dans le cas inverse, $\Delta\omega\_c$ est transmise par la sortie du bloc 17, pour être égale soit à $\Delta\omega\_reg$, soit à $\Delta\omega\_brut$, soit encore à Pth/Cmot, suivant les résultats des comparaisons exécutées dans les blocs 15 et 16.

On retrouve ainsi les trois niveaux d'arbitrage décrits plus haut, exécutés dans les blocs 16, 17 et 18 respectivement.

La consigne de glissement applicable étant ainsi déterminée, celle-ci est délivrée au bloc 10 de la figure 3, représenté en plus de détail à la figure 4. Comme cela apparaît sur cette figure, le signal d'erreur $\varepsilon = \Delta\omega\_c - \Delta\omega$ est d'abord traité dans un correcteur 20 avant d'être délivré au système 21. Ce correcteur peut être du type proportionnel-intégral (PI), incluant ou non une anticipation basée sur le couple moteur estimé pour accroître sa rapidité.

Le procédé suivant l'invention implique la connaissance de la température Tsys du système d'embrayage, soit de la température atteinte par les disques de friction de ce système, à protéger d'une dégradation d'origine thermique. L'utilisation de moyens de mesure de cette température pouvant s'avérer très coûteuse on propose, suivant la présente invention, d'évaluer cette température à l'aide d'un estimateur logiciel. Un tel estimateur peut être constitué d'un filtre de Kalman tel que celui schématisé à la figure 5, exécutant les équations de la thermique, simplifiées, suivantes :

$$m_s C_{p\_s} \frac{dT_{sys}}{dt} = C_{emb}. \Delta\omega + hS(T_{oil} - T_{sys})$$

$$V_{oil}\rho_{oil}C_{p\_oil}\frac{dT_{oil}}{dt} = d_{oil}C_{p\_oil}(T_{oil\_in} - T_{oil}) + hS(T_{sys} - T_{oil})$$

dans lesquelles :

- $C_{emb}$ est le couple transmis par l'embrayage,
- $T_{sys}$ est la température du solide fictif constitué par les disques de friction de l'embrayage, ou température du système telle que définie plus haut,
- $T_{oil}$, et $T_{oil\_in}$ sont les températures de l'huile de refroidissement en sortie et en entrée d'embrayage, respectivement,
- $V_{oil}$ est le volume d'huile circulant dans l'embrayage,

- $m_s$ est la masse des disques,
- $d_{oil}$ est le débit massique d'huile dans le circuit de refroidissement,
- $C_{p\_s}$ et $C_{p\_oil}$ la capacité calorifique des disques et de l'huile, respectivement,
- S la surface des disques,
- h le coefficient de convection, et
- $\rho_{oil}$ la densité de l'huile.

Le couple $C_{emb}$ transmis par l'embrayage peut être calculé par des moyens logiciels appropriés. Les autres paramètres définis ci-dessus sont soit connus comme étant des caractéristiques des matériaux en jeu, soit mesurés par des capteurs incorporés au dispositif de la figure 1. Sur cette figure on a représenté les positions de deux capteurs de température 22 et 23 délivrant les températures $T_{oil}$ et $T_{oil-in}$ de l'huile du circuit de refroidissement, en sortie de disque d'embrayage et en entrée d'embrayage, respectivement. De même on a représenté les positions de deux capteurs 24 et 25 de régime moteur Nmot et de régime en sortie d'embrayage Nemb respectivement, permettant de mesurer le glissement $\Delta\omega$ = Nmot - Nemb de l'embrayage.

On notera que ce glissement pourrait aussi être calculé à partir des équations générales de la dynamique régissant le comportement du moteur et de l'embrayage respectivement, et de la connaissance des couples en sortie du moteur et de l'embrayage respectivement. Le couple moteur est une variable d'entrée du système. La seule grandeur de commande est le couple en sortie d'embrayage qui sert effectivement à piloter le système par asservissement à la consigne de glissement élaborée.

La modélisation de la température présentée ci-dessus correspond à un système du deuxième ordre. On pourra donc choisir, pour le correcteur 14 incorporé à la boucle fermée de régulation en température un régulateur du type PI délivrant une consigne de glissement en régulation de la forme :

$$\Delta\omega\_c\_reg = Kp[\,(\,Tacc - Tsys) + 1/Ti \int (Tacc - Tsys)dt]$$

Les deux paramètres de mise au point de ce correcteur sont donc le gain proportionnel Kp et le gain intégral 1/Ti. Ces paramètres pourront être choisis de manière à régler le compromis entre temps de réponse et dépassement.

Bien entendu d'autres types de régulation, bien connus de l'homme de métier, pourraient être choisis en lieu et place de celui décrit ci-dessus, bien que ce dernier soit bien adapté à son objet.

Le procédé de commande du glissement suivant l'invention est utilisable durant diverses phases de fonctionnement en patinage de l'embrayage d'un véhicule automobile propulsé par un moteur à combustion interne. Il peut servir, en particulier, à filtrer des acyclismes du couple délivré par un tel moteur, notamment à bas régime.

On va maintenant décrire, en liaison avec les graphes des figures 6A et 6B, une séquence de fonctionnement, illustrative et non limitative, de mise en oeuvre de l'invention. On précise auparavant qu'une hystérésis est mise en place sur chacun des seuils Tseuil1 et Tseuil2 afin d'empêcher des oscillations trop rapides des états du système.

Sur les graphes des figures 6A et 6B, on observe un premier dépassement de la température de seuil Tseuil1 par la température des disques de l'embrayage, autour de l'instant t = 1000 s, du fait d'un passage de la consigne de glissement brut, ou d'agrément, à 10 tr/mn. La stratégie de régulation en boucle fermée de la température des disques est alors activée pour ramener la consigne de glissement applicable autour de 7 tr/mn. Cela à pour effet de ramener la température du disque à une valeur acceptable, inférieure à Tseuil1. Sur la figure 6B il apparaît que la consigne demandée, en trait plein, et le glissement réel, en trait interrompu, se suivent étroitement.

Après un retour temporaire de la consigne de glissement brut à une valeur plus basse encore, soit 4 tr/mn, on observe un deuxième dépassement du seuil Tseuil1, corrigé comme le premier.

Les choses pourraient cependant se passer autrement. En effet, du fait d'un niveau de couple demandé plus élevé, ou bien d'un débit de liquide de refroidissement plus faible, la phase du procédé suivant l'invention basée sur le contrôle en boucle fermée de la température de l'embrayage pourrait être insuffisamment rapide pour être efficace et la température du système pourrait alors continuer à monter pour franchir le seuil Tseuil2. Suivant la présente invention, ce franchissement provoque une chute brutale, à zéro, de la consigne de glissement. La température de l'embrayage chute alors elle aussi rapidement. Une nouvelle consigne de glissement brut ne pourra être demandée qu'après le retour de cette température en dessous du seuil Tseuil1.

Bien entendu l'invention n'est pas limitée au mode de réalisation décrit et représenté qui n'a été donné qu'à titre d'exemple. C'est ainsi qu'on ne sortirait pas du cadre de l'invention en intégrant au procédé un régulateur multivariable délivrant des consignes de glissement et de température et dont les grandeurs de commande seraient la nouvelle consigne de glissement et de débit du liquide de refroidissement. Ce dernier n'intervient pas dans le mode de réalisation décrit plus haut du procédé suivant l'invention.

**Revendications**

1. Procédé de commande du glissement d'un système d'embrayage humide muni d'un circuit de refroidissement et formant partie d'une transmission d'un véhicule automobile propulsé par un moteur à combustion interne, suivant lequel on asservit ledit glissement ($\Delta\omega$) à une valeur de consigne ($\Delta\omega$_c), on évalue la température (Tsys) dudit système, on la compare à une température de seuil (Tseuil1) prédéterminée et, lorsque ladite température (Tsys) du système dépasse ladite température de seuil (Tseuil1), on élabore une consigne de glissement en régulation thermique ($\Delta\omega$_c_reg) par régulation en boucle fermée de ladite température du système (Tsys) **caractérisé en ce que** ladite consigne de glissement en regulation thermique est elaborée par regulation en boucle fermée de ladite température du système (TSys) sur une température (Tacc) inférieure à ladite température de seuil (Tseuil1) et **en ce que** on choisit pour ladite valeur de consigne ($\Delta\omega$_c) du glissement dudit système ($\Delta\omega$_c) = min($\Delta\omega$_c_brut, $\Delta\omega$_c_reg), où ($\Delta\omega$_c_brut) est une consigne de glissement brut, indépendante de la température dudit système.

2. Procédé conforme à la revendication 1, **caractérisé en ce que**, lorsque la température (Tsys) du système est inférieure à ladite température de seuil (Tseuil1), on choisit pour ladite valeur de consigne du glissement ($\Delta\omega$_c) = min($\Delta\omega$_c_brut,Pth/Cmot) où Pth est la puissance thermique évacuable par ledit circuit de refroidissement et (Cmot) le couple délivré par le moteur.

3. Procédé conforme à l'une quelconque des revendications 1 et 2, **caractérisé en ce que**, lorsque la température (Tsys) du système est supérieure à une deuxième température de seuil (Tseuil2) elle-même supérieure à la première température de seuil (Tseuil1), on annule la valeur de la consigne de glissement ($\Delta\omega$_c).

4. Procédé conforme à l'une quelconque des revendications précédentes, **caractérisé en ce que** ladite consigne de glissement brut ($\Delta\omega$_c_brut) est cartographiée.

5. Procédé conforme à la revendication 4, **caractérisé en ce que** les paramètres d'entrée de ladite cartographie sont le régime (Nmot) et le couple (Cmot) dudit moteur.

6. Procédé conforme à l'une quelconque des revendications précédentes, **caractérisé en ce qu'**on évalue ladite température (Tsys) dudit système au moyen d'un estimateur constitué d'un filtre de Kalman.

7. Procédé conforme à la revendication 6, **caractérisé en ce que** les grandeurs d'entrée dudit filtre sont les régimes d'entrée et de sortie dudit système, les températures d'entrée et de sortie dudit circuit de refroidissement et le couple transmis par ledit système.

8. Procédé conforme à l'une quelconque des revendications précédentes, **caractérisé en ce que** ladite boucle fermée incorpore un correcteur Pl.

9. Procédé conforme à l'une quelconque des revendications 3 à 7, **caractérisé en ce que** les seuils correspondant auxdites températures de seuil (Tseuil1, Tseuil2) sont affectés d'une hystérésis.

**Claims**

1. Method for controlling the slip in a wet clutch system equipped with a cooling circuit and forming part of a transmission of a motor vehicle propelled by an internal combustion engine, whereby the said slip ($\Delta\omega$) is controlled to a reference value ($\Delta\omega$_c), the temperature (Tsys) of the said system is evaluated and compared against a predetermined threshold temperature (Tthresh1) and, when the said system temperature (Tsys) exceeds the said threshold temperature (Tthresh1), a thermal regulation slip reference ($\Delta\omega$_c_reg) is formulated by closed-loop regulation of the said system temperature (Tsys), **characterized in that** the said thermal regulation slip reference is formulated by closed-loop regulation of the said system temperature (Tsys) to a temperature (Tacc) below the said threshold temperature (Tthresh1), and **in that** the said reference value ($\Delta\omega$_c) chosen for the slip of the said system is ($\Delta\omega$_c) - min ($\Delta\omega$_c_raw, $\Delta\omega$_c_reg) , where ($\Delta\omega$_c_raw) is a raw slip reference, independent of the temperature of the said system.

2. Method according to Claim 1, **characterized in that**, when the system temperature (Tsys) is below the said threshold temperature (Tthresh1), the said reference value chosen for the slip is ($\Delta\omega$_c)=min($\Delta\omega$_c_raw,Pth/Cmot) where Pth is the thermal power that the said cooling circuit can dissipate and (Cmot) is the torque delivered by the engine.

3. Method according to either one of Claims 1 and 2, **characterized in that** when the system temperature (Tsys) is above a second threshold temperature (Tthresh2), itself higher than the first threshold temperature (Tthresh1), the slip reference value ($\Delta\omega\_c$) is cancelled.

4. Method according to any one of the preceding claims, **characterized in that** the said raw slip reference ($\Delta\omega\_c\_$raw) is mapped.

5. Method according to Claim 4, **characterized in that** the input parameters for the said map are the engine speed (Nmot) and the engine torque (Cmot).

6. Method according to any one of the preceding claims, **characterized in that** the said system temperature (Tsys) is evaluated using an estimator consisting of a Kalman filter.

7. Method according to Claim 6, **characterized in that** the input values for the said filter are the input and output speeds of the said system, the inlet and outlet temperatures of the said cooling circuit, and the torque transmitted by the said system.

8. Method according to any one of the preceding claims, **characterized in that** the said closed loop incorporates a PI corrector.

9. Method according to any one of Claims 3 to 7, **characterized in that** the thresholds corresponding to the said threshold temperatures (Tthresh1, Tthresh2) have hysteresis associated with them.


**Patentansprüche**

1. Verfahren zur Steuerung des Schlupfs eines Nasskupplungssystems, das mit einem Kühlkreislauf versehen und Teil eines Getriebes eines von einem Verbrennungsmotor angetriebenen Kraftfahrzeugs ist, gemäß dem der Schlupf ($\Delta\omega$) auf einen Sollwert ($\Delta\omega\_c$) geregelt wird, die Temperatur (Tsys) des Systems ermittelt und mit einer vorbestimmten Schwellentemperatur (Tseuil1) verglichen wird, und, wenn die Temperatur (Tsys) des Systems die Schwellentemperatur (Tseuil1) überschreitet, ein Schlupfsollwert zur Wärmeregulierung ($\Delta\omega\_c\_reg$) durch Regulierung der Temperatur des Systems (Tsys) in geschlossenem Regelkreis erarbeitet wird, **dadurch gekennzeichnet, dass** der Schlupfsollwert zur Wärmeregulierung durch Regulierung der Temperatur des Systems (Tsys) in geschlossenem Regelkreis auf eine Temperatur (Tacc) unter der Schwellentemperatur (Tseuil1) erarbeitet wird und dass für den Sollwert ($\Delta\omega\_c$) des Schlupfs des Systems ($\Delta\omega\_c$) = min ($\Delta\omega\_c\_brut$, $\Delta\omega\_c\_reg$) gewählt wird, wobei ($\Delta\omega\_c\_brut$) ein Bruttoschlupfsollwert ist, der von der Temperatur des Systems unabhängig ist.

2. Verfahren nach Anspruch 1, **dadurch gekennzeichnet, dass**, wenn die Temperatur (Tsys) des Systems unter der Schwellentemperatur (Tseuil1) liegt, für den Sollwert des Schlupfs ($\Delta\omega\_c$) = min($\Delta\omega\_c\_brut$,Pth/Cmot) gewählt wird, wobei Pth die Wärmeleistung, die vom Kühlkreislauf abgeleitet werden kann, und (Cmot) das vom Motor gelieferte Drehmoment ist.

3. Verfahren nach einem der Ansprüche 1 und 2, **dadurch gekennzeichnet, dass**, wenn die Temperatur (Tsys) des Systems höher als eine zweite Schwellentemperatur (Tseui12) ist, die selbst höher ist als die erste Schwellentemperatur (Tseuil1), der Wert des Schlupfsollwerts ($\Delta\omega\_c$) auf null gesetzt wird.

4. Verfahren nach einem der vorhergehenden Ansprüche, **dadurch gekennzeichnet, dass** der Bruttoschlupfsollwert ($\Delta\omega\_c\_brut$) kartographiert wird.

5. Verfahren nach Anspruch 4, **dadurch gekennzeichnet, dass** die Eingangsparameter der Kartographie die Drehzahl (Nmot) und das Drehmoment (Cmot) des Motors sind.

6. Verfahren nach einem der vorhergehenden Ansprüche, **dadurch gekennzeichnet, dass** die Temperatur (Tsys) des Systems mittels eines Schätzglieds ermittelt wird, das aus einem Kalman-Filter besteht.

7. Verfahren nach Anspruch 6, **dadurch gekennzeichnet, dass** die Eingangsgrößen des Filters die Eingangs-und Ausgangsdrehzahlen des Systems, die Eingangs-und Ausgangstemperaturen des Kühlkreislaufs und das vom System übertragene Drehmoment sind.

8. Verfahren nach einem der vorhergehenden Ansprüche, **dadurch gekennzeichnet, dass** die Regelschleife einen Regler PI enthält.

9. Verfahren nach einem der Ansprüche 3 bis 7, **dadurch gekennzeichnet, dass** den den Schwellentemperaturen (Tseuill, Tseuil2) entsprechenden Schwellwerten eine Hysterese zugeteilt ist.

Fig. 1

Fig. 2

Fig. 3

Fig. 4

Fig. 5

Fig. 6A

Fig. 6B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4124722